# EUROPEAN PATENT SPECIFICATION

(11) **EP 1 615 421 B1**
(45) Date of publication and mention of the grant of the patent: **03.08.2011**
(21) Application number: 05253400.5
(22) Date of filing: 02.06.2005
(51) Int. Cl.: H04N 1/407

(54) **Image scanner**
Bildabtaster
Balayeur d'image

(30) Priority: 07.06.2004 JP 2004168855
(43) Date of publication of application: 11.01.2006
(73) Proprietor: Ricoh Company, Ltd., Tokyo 143-8555 (JP)
(72) Inventor: Soeda, Yoshihisa, Kawasaki Kanagawa-pref (JP)
(74) Representative: Leeming, John Gerard

(56) References cited:
- EP-A- 0 808 057
- EP-A- 0 878 958
- EP-A- 1 137 255

## Description

The present invention relates to an image scanner, and more particularly to an image scanner configured to perform image correction.

In a known image scanner, when a line of a document is scanned in a sub scanning direction, image information is focused on a surface of a charge-coupled device (CCD). The CCD outputs an analog signal corresponding to the scanned data.

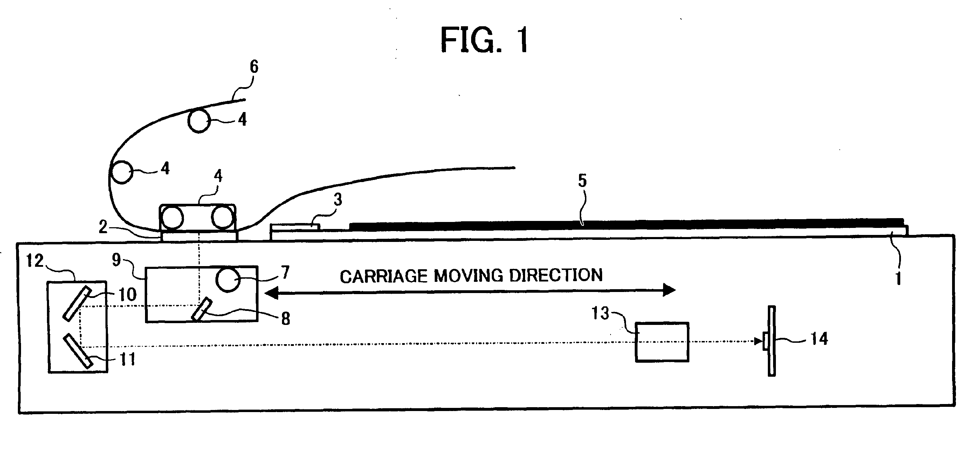

Figure 1 shows an example of an image scanner. The image scanner includes a lamp 7 to illuminate the document 5. First and second carriages 9 and 12, which include first, second and third mirrors 8, 10, and 11, are used to transmit light containing data corresponding to the image on the document 5 through a lens 13 to a signal processing board 14 including the CCD (referred to as the CCD 14). The first and second carriages 9 and 12 are moved in a known manner to scan the document 5. The analog output from the CCD 14 is converted to digital form in a known manner.

Before scanning the document 5, the whiteboard 3 is scanned to generate shading compensation data. The shading compensation data is stored in a memory. The generation of shading compensation data compensates for uneven light distribution within the image scanner, uneven sensitivities among portions of the CCD, and the like.

In the known image scanner, to increase the speed at which documents are scanned, the CCD includes multiple CCD shift registers capable of simultaneously scanning multiple portions of the document. The speed at which the document is scanned by this parallel processing of multiple portions of the document with the CCD is greater than the speed of a system that does not use multiple shift registers.

An example of the CCD including multiple shift registers includes a 2 channel odd/even output type CCD. Another example of the CCD including multiple shift registers includes a 4 channel CCD, in which odd and even outputs are provided for each of the first half and the last half of the document.

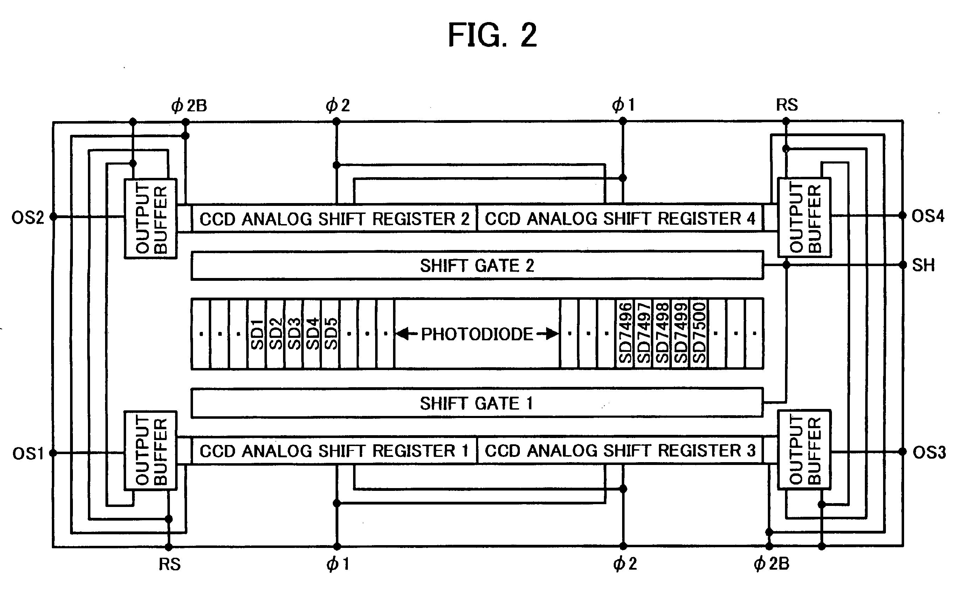

Figure 2 shows an example of such a 4 channel CCD. As shown in the figure, the CCD 14 can include CCD analog shift register 1 to scan even number pixels of the first half portion of the document, CCD analog shift register 2 to scan odd number pixels of the first half portion of the document, CCD analog shift register 3 to scan even number pixels of the last half portion of the document, and CCD analog shift register 4 to scan odd number pixels of the last half portion of the document. Reset pins RS of the CCD 14 reset the output buffers. Shift pin SH opens shift gates 1 and 2, and shifts data to each of the registers. Output signal pin OS1 outputs from shift register 1. Output signals pins OS2-4 similarly output from shift registers 2-4, respectively.

Further each of the CCD analog shift registers 1-4 are connected to 2-phase transfer clocks ϕ1 and ϕ2. ϕ2B, which is a reversed phase of the 2-phase transfer clock ϕ2, is also connected to the each of the CCD analog shift registers 1-4. In addition, each of the outputs of the CCD analog shift registers has an output buffer amplifying an analog output data to the outside and shaping a waveform of the amplified analog output data.

In the known image scanner, the four CCD analog shift registers are used to scan the first half portion in a first direction and last half portion in a second direction opposite to the first direction. Thus, the CCD 14 of the present invention has a reading speed of 2 times faster than a 2 channel odd / even output type image sensor. The CCD 14, which is a 4 channel output image sensor (FB (front back) type image sensor) includes a light-sensitive element line divided in 2 at the center of a main scanning direction (i.e., divided into the first half portion and the last half portion).

Japanese laid-open patent publication no. 2000-188686 shows a plural signal processing device executing predetermined signal processing to an image signal output from each output device of an image sensor of a first and last separation reading system and a standard board for white and gray colors. The publication further shows that the signal processing device matches the image signal level of the white standard board to a first predetermined level, and matches the image signal level of the gray standard board to a second predetermined level. Adjustment data is calculated to match image signal levels corresponding to a level interpolated between the first level and the second level. The image signal output is adjusted based on the adjustment data.

Japanese laid-open patent publication no. 2002-218186 shows a tone pattern generated inside a device being output as an image, and correction processing calculating based on a difference between image data corresponding to the left side of 4 channel output CCD, as opposed to correcting processing calculating based on the right side of the 4 channel output CCD. The image data corresponding to the left is set as the standard data, and a γ correction is operated and a γ correction table is set.

Japanese laid-pen patent publication no. 2002-158837 shows a CCD line sensor divided into a first half odd portion and a last half even portion at the center of main-scanning direction. The image forming apparatus includes a sample hold circuit sampling and holding each output, a gain amplifier amplifying each output, a reading value detecting device detecting a maximum value of the image data reading the standard board or reading data of any images, and a processing device adjusting the amplification rate of the gain amplifier to be the same reading level of a connection of a first half part and a last half part.

However, in the image sensor using plural CCD shift registers there is a problem of variations of analog output delay times, caused by an unintended delay of a transfer start timing from the ϕ2B transfer clock to the output gate. The delay is caused by voltage potential variations at the last step of a shift register, as a result of variations of process conditions during formation of the CCD.

It is difficult to predict and account for differences between individual pixels even when the CCD device is a 2 channel device that provides odd and eve outputs, because differences between individual pixels may be only a single pixel unit. However, differences among outputs of the 4 channel device of the first half portion and the last half portion are increased by varying the delay time between signals output from the first half portion and the last half portion of the CCD.

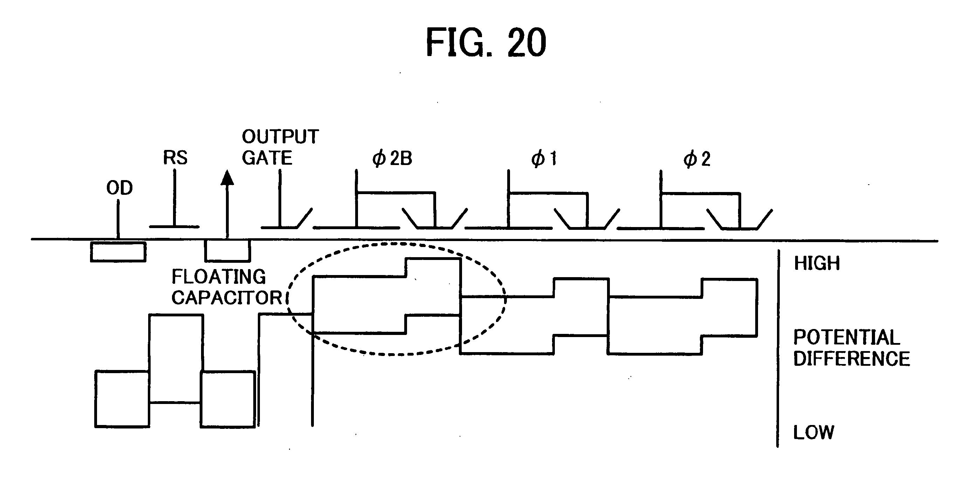

Figure 20 shows that a difference in potential of the ϕ2B transfer clock varies based on variations in the CCD, the variations in the CCD caused by imperfections in the manufacturing process of the CCD has a variation by a variation of a manufacturing process of CCD. As shown in the detail portion of the figure, a low signal corresponds to a low charge accumulation in the CCD, and a high signal corresponds to a high charge accumulation in the CCD. When the potential difference is increased, a transfer timing from the ϕ2B transfer clock to output gate is delayed if the electric charge accumulation in the CCD is decreased. The output signal also does not linearly correspond to a level of light measured by the CCD.

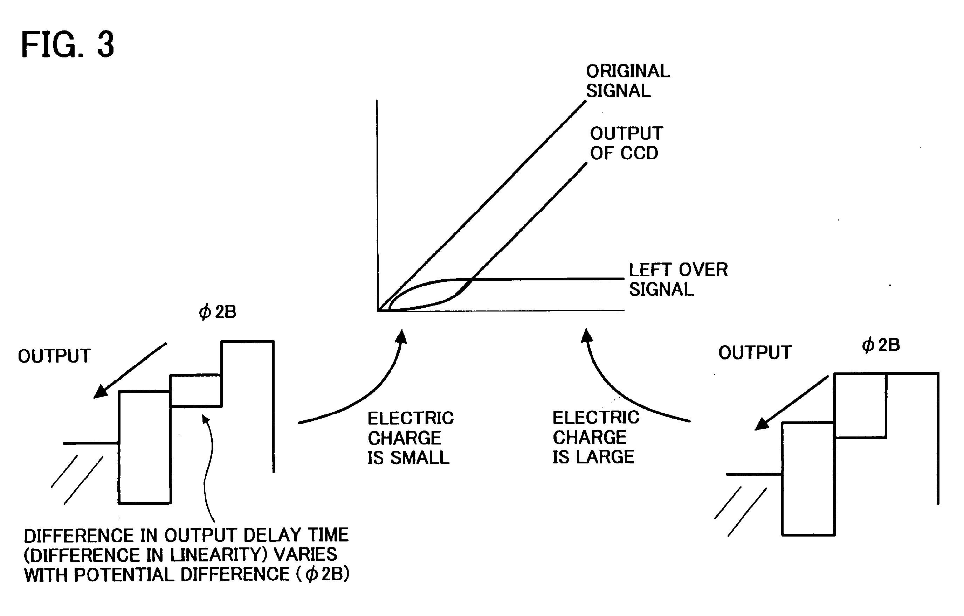

These variations of analog output delay times amplify noise caused by the CCD, and this noise affects differences between the first half portion and the last half portion. These variations especially affect analog output delay times corresponding to data measured by the CCD under low light levels. Differences between the linearity of the output signal and the outputs of the CCD analog shift registers are illustrated in Figure 3.

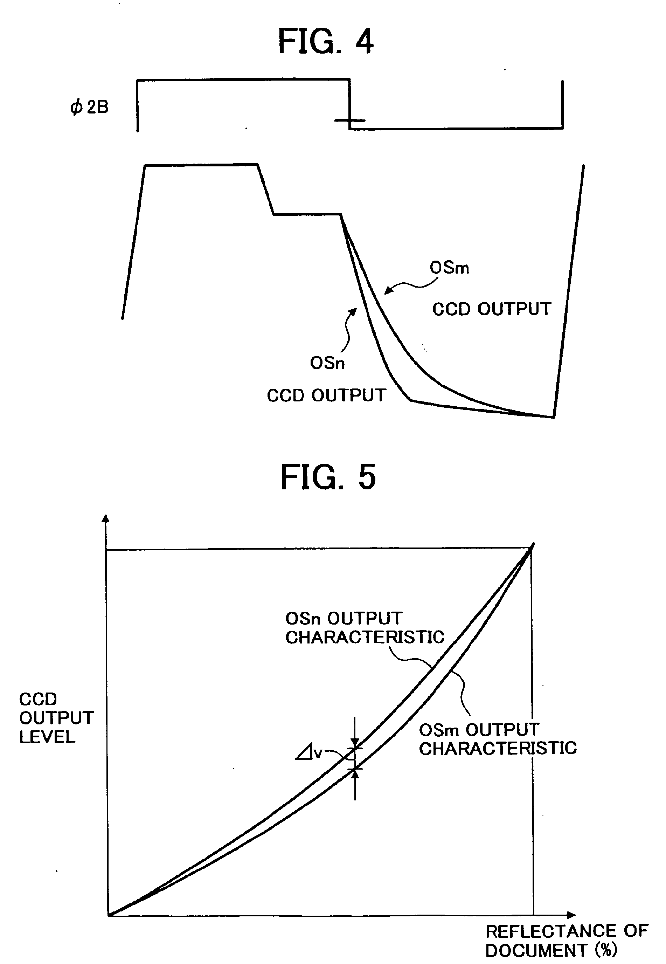

The left over signal of Figure 3 corresponds to the wave pattern output from the CCD analog shift register, the wave pattern output shown in Figure 4. As shown in the left side of Figure 3, when all the electric charge is output, linearity is good. This corresponds to the situation where the potential difference is small, and a small amount of electric charge is accumulated at a time of the output as determined by the ϕ2B transfer clock. In contrast, as shown in the right side of Figure 3, when the electric charge is not completely output, linearity is poor. This corresponds to the situation wherein the potential difference is great, and a large amount of electric charge is accumulated at a time of the output as determined by the ϕ2B transfer clock. As illustrated in Figure 3, by changing the difference in potential output at the time as determined by the ϕ2 transfer clock, a variation occurs in a delay time of analog output of OSm (a first half part of output signal: m = 1-4) and OSn (a last half part of output signal: n =1-4), as shown in Figure 4. The OSn (CCD output) signal shown in Figure 4 is an example of the situation when the potential difference is small during a small time interval as determined by the ϕ2 transfer clock. The OSm (CCD output) signal shown in Figure 4 is an example of the situation wherein the potential difference during a large time interval as determined by the ϕ2 transfer clock. The left side figure of Figure 3 shows an example of a large amount of electric charge accumulated in the CCD. The difference in the analog output delay times results in a difference of linearity, and degrades the quality of the image at the boundary between the first and last half portions. The center figure of Figure 3 shows the difference between the output of the CCD and the original signal.

The CCD can exhibit the characteristics shown in the right side of Figure 3, when the CCD outputs data measured under low illumination. This same CCD can then exhibit the characteristics shown in the left side of Figure 3, when the CCD outputs data measured under high illumination. Further, Figure 4 shows the situation in which the output of the CCD signal of each output buffer begins when the ϕ2B transfer clock is at a low level. In the case of the CCD measuring output from the first half portion and the last half portion, it is possible that such variations of the delay times cannot be isolated by searching for a particular pixel at which the difference occurs.

It is possible that differences in linearity among the CCD shift register outputs cannot be compensated by shading correction, as shown in Figure 5. In the CCD in which a first half portion and last half portion are measured, the level differences in linearity for a boundary between the first half portion and the last half portion cannot be compensated for by the shading correction, and therefore the differences in linearity for the boundary between the first half portion and the last half portion between medium density areas and high density areas may cause degradation in the quality of images produced as a result of the scanning.

To compensate for differences in linearity between CCD analog shift registers, a method to execute γ correction is shown, as applied to the output of each of the CCD analog shift registers, whether the CCD includes two or four CCD analog shift registers.

However, according to the method disclosed in Japanese laid-open patent publication no. 2000-188686, because an odd number pixel of a first half part and a last half part is synthesized with an analog signal, and an even number pixel of the first half part and the last half part are synthesized with an analog signal in the same way, there is the possibility of generating cross talk between the first half part data and last half part data. The cross talk can result in errors in the image formation.

In addition, according to the method disclosed in Japanese laid-open patent publication no. 2000-188686, costs are increased by using a memory for a look-up table for each of the CCD analog shift registers. Further, a precision of the correction may not be sufficient when depending on the criteria used to determine the level of correction.

It is possible to detect an average level of data of a correction near the boundary between the first half part and last half part of the data, by synthesizing an even number pixel and an odd number pixel of a first half part and synthesizing an even number pixel and an odd number pixel of a last half part. A difference in image density near the boundary is compensated for, and an abnormal image is prevented by γ correction of the data synthesized from an even number pixel and an odd number pixel of a first half part or an even number pixel and an odd number pixel of a last half part. The costs and time for reading data from memory can be reduced by reducing the memory size to the minimum size capable of storing the look-up table for a γ correction.

Further, when the memory storing the correction values is unexpectedly erased, it may not be possible to execute the correction and to avoid the generation of error images.

EP-1 137 255 A2 discloses an image reading apparatus in which a CCD outputs four channels of data: odd and even pixels for each of two halves of a scanning line. Separate gamma correction look-up tables are used for each channel.

The above and/or other advantages can be provided by the present invention, which provides image reading apparatus and a method of generating a correction table as defined in the appended claims.

A more complete appreciation of the present invention and many of the attendant advantages thereof are readily obtained as the same becomes better understood by reference to the following detailed description when considered in connection with the accompanying drawings, wherein:
Figure 1 is a cross-sectional view of an image scanner according to the present invention.
Figure 2 is a schematic view of a CCD including plural shift registers included in the image scanner of Figure 1.
Figure 3 is a graph showing differences between a linearity of an output signal and outputs of the CCD .
Figure 4 is a graph showing a wave pattern output from the CCD.
Figure 5 is a graph showing differences in output characteristics for reflectances of the document scanned by the CCD.
Figure 6 is a chart showing examples of average data of a boundary between the first half and the last half from a scanner scanning a 20 tone gray scale chart.
Figure 7 is a graph illustrating the data of the chart of Figure 6.
Figure 8 is a graph showing the last half data as having been linearized, and the first half data being adjusted relative to the linear last half data based on differences between the measures first half data and the measured last half data.
Figure 9 is a schematic showing an example of an image reading circuit board and an image processing circuit board of the image scanner, in which the γ correction is carried out on the last half data after the first half data has been linearized.
Figure 10 is a schematic showing an example of the image reading circuit board and the image processing circuit board of the image scanner, in which the γ correction is carried out on the first half data after the last half data has been linearized.
Figure 11 is a flow chart showing the scanner γ correction based on scanning the gray scale chart placed on the contact glass.
Figure 12 is a flow chart showing the scanner γ correction based on scanning a gray scale chart as a component of the image scanner.
Figure 13 is a flow chart showing the scanner γ correction based on user input.
Figure 14 is a flow chart showing the storing in the memory of detected data for adjustment.
Figure 15 is a flow chart showing the procedure of making γ correction table operating γ correction characteristics from data stored in the memory when the image scanner is turned on.
Figure 16 is a flow chart showing the procedure for calculating the γ correction characteristics based on the detected data stored in the memory, when the image scanner is turned on.
Figure 17 is a flow chart showing the scanner γ correction based on user input.
Figure 18 is bottom view of the gray scale chart included in the image scanner.
Figure 19 is a cross-sectional view of the image scanner including the gray scale chart.
Figure 20 is a graph showing a difference in potential of the ϕ 2B transfer clock based on variations in the CCD.

The invention is now described with reference to the drawings.

Figure 1 is a cross-sectional view of an image scanner according to the present invention. The image scanner can includes a contact glass 1 through which a document is scanned, a white board 3 for generating shading data, a first carriage 9 including a lamp 7 for illuminating the document and including a first mirror 8, a second carriage 12 including second and third mirrors 10 and 11, a lens unit 13 for focusing portions of the document reflected by the mirrors 9-11 on a charge-coupled device (CCD), and a signal processing board 14 including the CCD. Although not shown in the drawings, the image scanner can also include drive motors for driving the first and second carriages 9 and 12, a home position sensor, a document detection sensor, and/or other components, including components of known image scanners.

As shown in Figure 2, the signal processing board 14 can include CCD analog shift registers 1-4 for scanning the document in an expedited manner. Specifically, the CCD analog shift register 1 can output odd number pixel information for a first half of a document, the CCD analog shift register 2 can output even number pixel information for the first half of the document, the CCD analog shift register 3 can output even number pixel information for a last half of the document, and the CCD analog shift register 4 can output odd number pixel information for the last half of the document.

The image scanner can be operated in at least two modes. In a first mode, the document 5 is placed on the contact glass 1, and the lamp 7 is energized. Both the first and second carriages 9 and 12 move along the carriage moving direction of Figure 1. In this mode, the first and second carriages 9 and 12 scan the whiteboard 3, and generate corresponding shading data, prior to scanning the document 5. Shading compensation processing, based on the shaded data, is performed concurrently with the scanning of the document 5.

In a second mode, a document conveyor 4 conveys the document 6 past the energized lamp 7, while the first and second carriages 9 and 12 remain stationary during scanning of the document 6. In this mode, however, prior to the scanning of the document 6, the first carriage 9 is moved to a position below the whiteboard 3, such that the shaded data is read. The first carriage 9 is moved to a home position prior to the conveyance of the document 6 by the document conveyor 4.

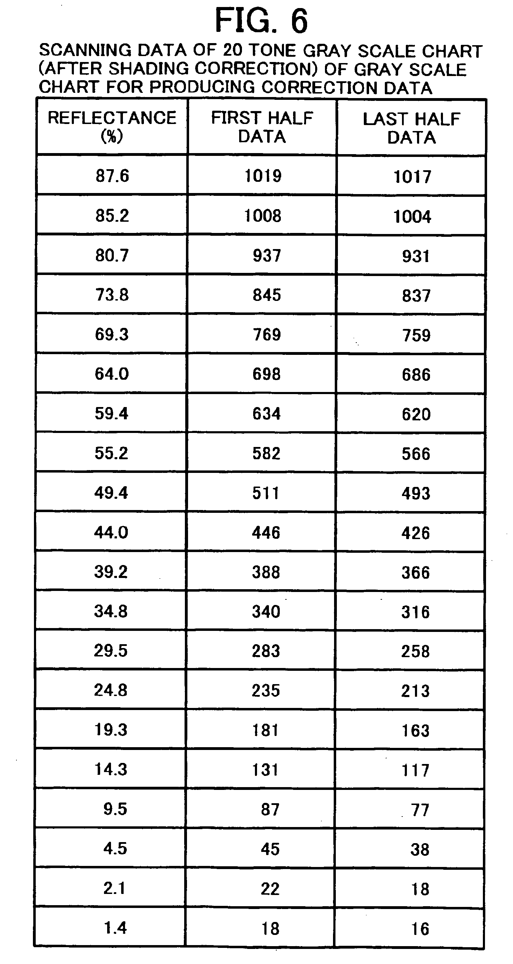

Figure 6 is a chart showing examples of average data of a boundary between the first half and the last half from a scanner scanning a 20 tone gray scale chart. Reflectance is linearly indicated on the gray scale chart. Specifically, the chart shows scanning data obtained by the CCD shift registers 1 and 2 outputting data from scanning a first half of a gray scale chart, in the column labeled "first half data," and obtained by CCD analog shift registers 3 and 4 outputting data from scanning the last half of the gray scale chart, in the column labeled "last half data," at a boundary between the first half and the last half, for detected reflectance values, after shading correction based on the shaded data. The chart shows 20 data points for each of the first and last half data, each of the 20 data points being generated by averaging the values obtained by the CCD analog shift registers outputting information for the even and odd number pixels. It is to be understood that the chart, which includes 40 data points for both the first and last half of the gray scale chart, is an example for one of the four colors (red, green, blue, and black) scanned by the signal processing board 14, and that therefore 160 data points are used to provide a scanner γ correction table for the signal processing board 14 that scans all four colors.

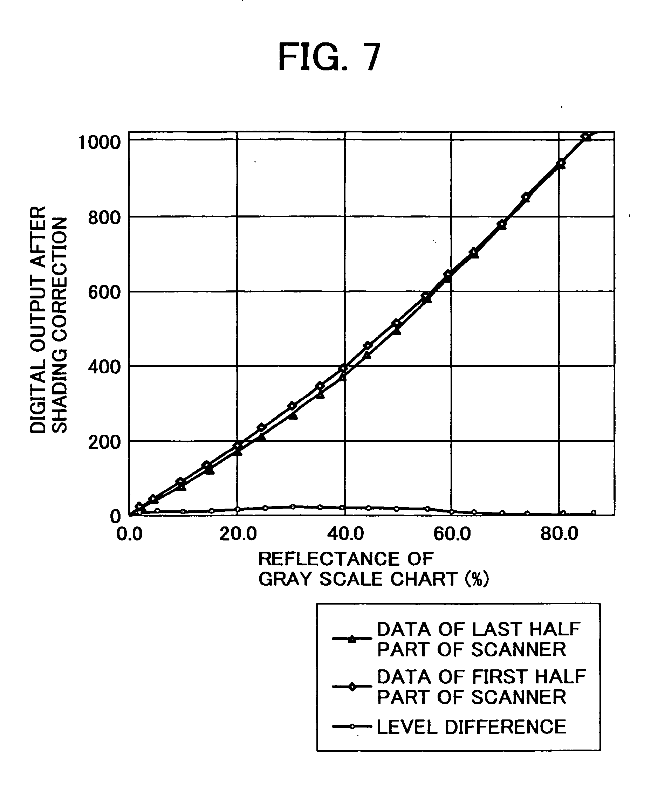

Figure 7 is a graph illustrating the data of the chart of Figure 6. In Figure 7, the Y-axis indicates output data after shading correction, and the X-axis indicates detected reflectance values.

Ideally both of the lines connecting each of the first half data points and the last half data points would be linear, because the gray scale chart is a linear chart. Thus, separate γ correction can be performed on both the first half data and the last half data, to make each of the first half data and the last half data linear.

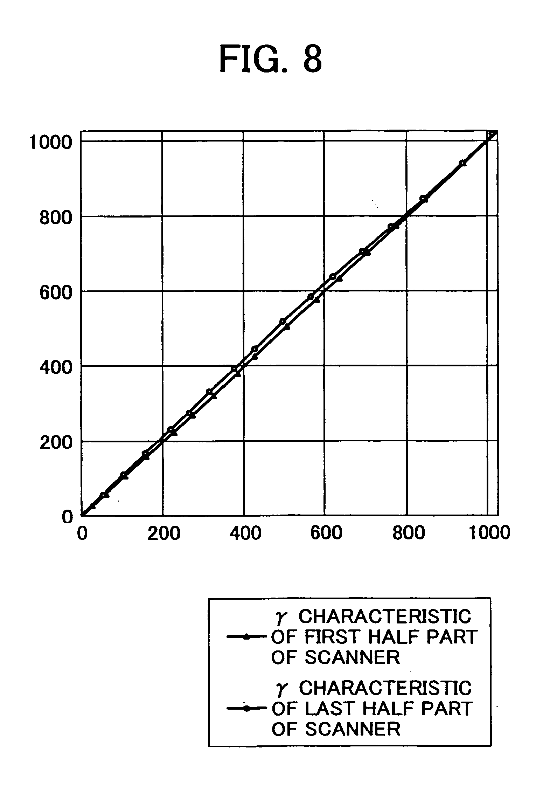

However, it has been determined by the inventor that one of the first half data or the last half data can be corrected to be linear, and the other of the last half data and the first half data can be adjusted based on differences between the measured first half data and the measured last half data, as shown in Figure 8. Specifically, Figure 8 shows the last half data as having been linearized, and the first half data being adjusted relative to the linear last half data based on differences between the measures first half data and the measured last half data.

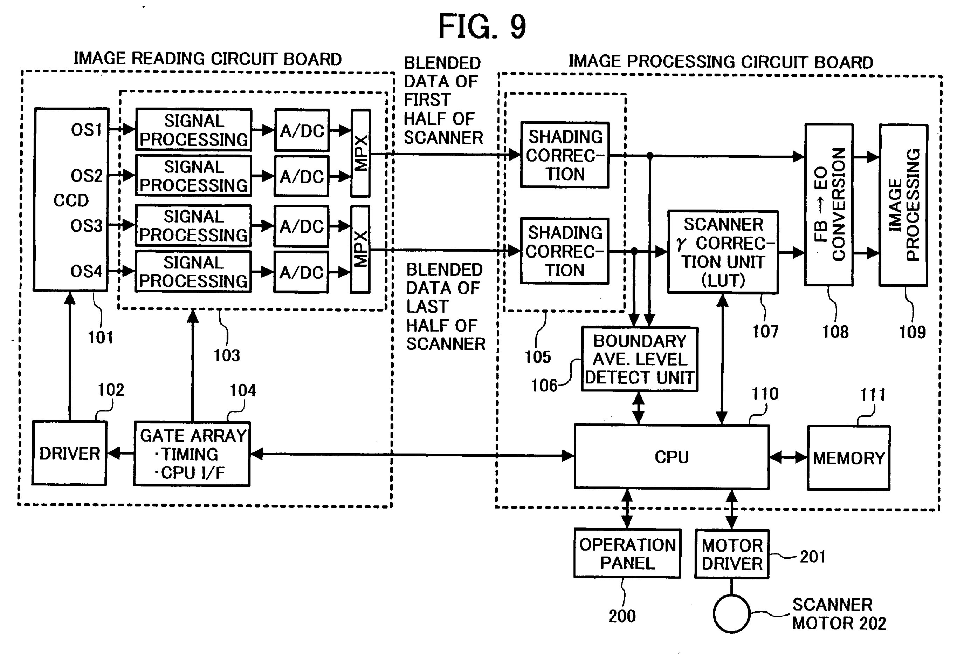

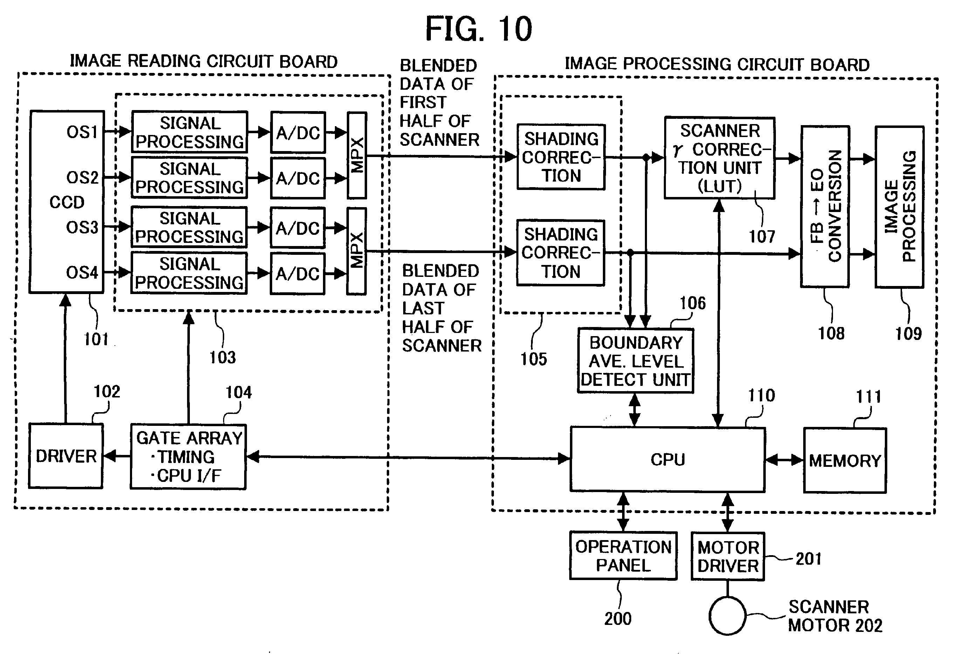

Figure 9 shows an example of an image reading circuit board and an image processing circuit board of the image scanner, in which the γ correction is carried out on the last half data after the first half data has been linearized. Figure 10 shows an example of the image reading circuit board and the image processing circuit board of the image scanner, in which the γ correction is carried out on the first half data after the last half data has been linearized. As shown in Figures 9 and 10, a scanner γ correction unit 107 can be used on one of the first data half and the second data half, such that two scanner γ corrections unit 107 are not required. By this arrangement, costs of the image scanner are reduced as compared to the image scanner using two such correction units.

The first half data or the last half data can be linearized by any known arithmetic operations. Further, known arithmetic operations can be applied to the other of the last half data or the first half data, which has not been linearized, the adjust the other of the last half data or the first half data based on the linearized one of the first half data and the last half data and the difference between the measured first half data and the measured last half data.

As shown in Figures 9 and 10, the image reading circuit board includes a CCD 101 converting light reflected from the document to an analog output, a signal processing unit 103 amplifying and converting the output from the CCD 101 with analog to digital converters (A/DC), a gate array 104 for generating a driving timing of the CCD 101, and a CCD driver 102.

The signal processing unit 103 performs a black offset adjustment as well as a gain adjustment, among other processes. The signal processing unit 103 also blends the data from the even and odd number pixels in the first half data and in the last half data. The data is then output from the image reading circuit board to the image processing circuit board.

The image processing circuit board includes the shading correction unit 105 for performing shading correction on the composed data of the odd number pixels and the even number pixels for each of the first half data and the last half data. A boundary average level detecting unit 106 detects an average level of a boundary of the first half data and the last half data, and sends the information to a CPU (central processing unit) 110.

The image processing circuit board also includes the scanner γ correction unit 107, which as shown in Figure 9 corrects the composed data of the last half data after shading correction. An FL to EO (first/last to even/odd) converting unit 108 converts the composed data of the first half data after shading correction and the composed data of the last half data after shading correction to the even number pixels and the odd number pixels for each of the first half data and the last half data. An image processing unit 109 performs various image processes in the image processing circuit board. The CPU 110 controls the image processing circuit board and a timing of the image reading circuit board. The operation panel 200 for controlling scanning is connected to the CPU 110, as are a motor driver 201 to control a scanner motor 202 and a memory 111.

As discussed above, as shown in Figure 9 only the composed data of the last half data is subject to scanner γ correction with the scanner correction γ unit 107 after shading correction, by way of a look-up table (LUT). By this arrangement, it is not necessary to linearize the last half data. Rather, the scanner γ correction is performed on the even and odd number pixels of the last half part, which has not been linearized, and not on the first half part that has been linearized.

After the scanner γ correction, the composed data of the first half data and the composed data of the last half data is separated into even and odd number pixels for the first half data and even and odd number pixels for the last half data. The image is then processed by the image processing unit 109.

The operation unit 200 can be used by an operator to determine conditions under which image scanning is to occur. The operation unit 200 can be used to determine conditions when scanner γ correction occurs, as well as to determine under what conditions the gray scale chart is to be read.

Figure 10 shows the image reading circuit board and the image processing circuit board, similar to those shown in figure 9. Figure 10 shows, however, the scanner γ correction unit 107 corrects the composed data of the first half data after shading correction, rather than correcting the composed data of the last half data. In this case, the last half data has been linearized. Specifically, the composed data of the first half data undergoes scanner γ correction after shading correction, and the composed data of the last half data does not undergo scanner γ correction. The scanner γ correction occurs on the even number pixels of the first half data and the odd number pixels of the first half data, through the use of the look-up table.

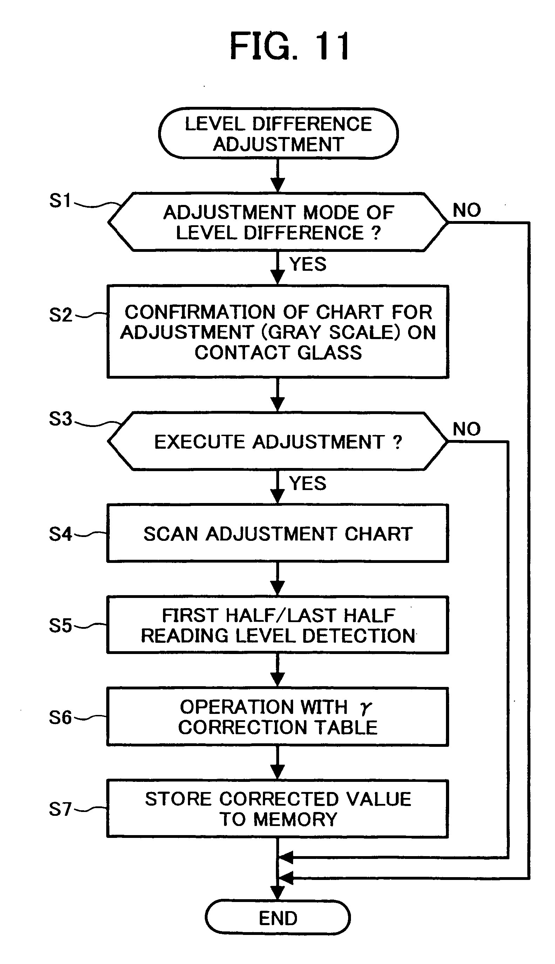

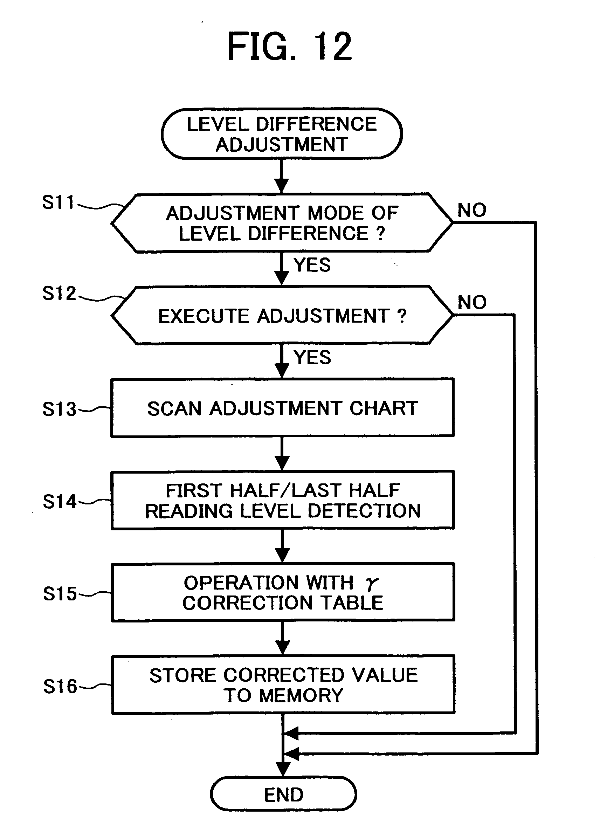

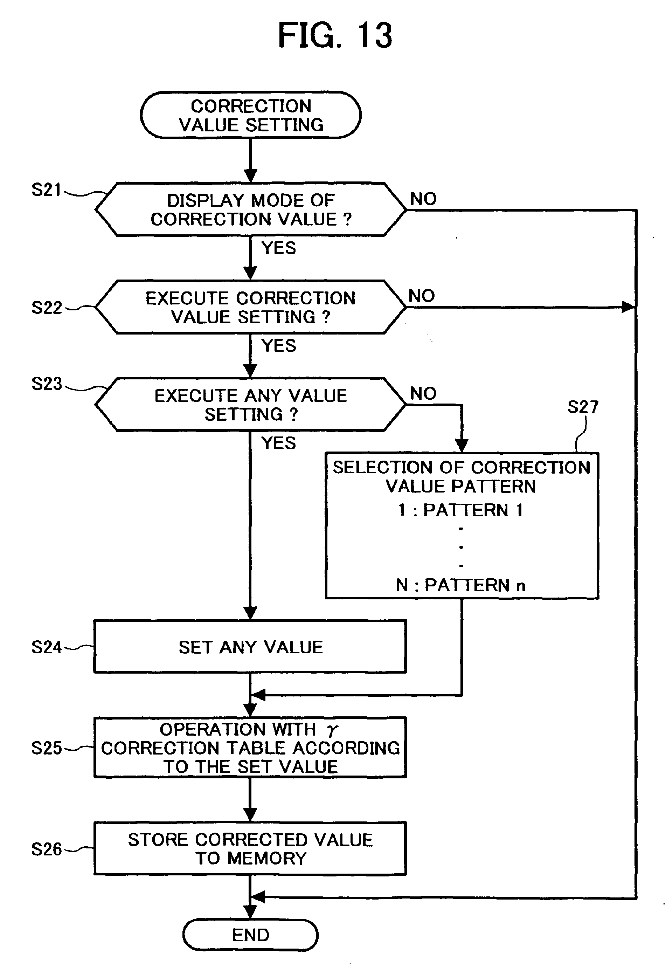

Figures 11-13 are flow charts showing methods of adjusting the image scanner. Specifically, Figure 11 shows the scanner γ correction based on scanning the gray scale chart placed on the contact glass 1. Figure 12 shows the scanner γ correction based on scanning a gray scale chart as a component of the image scanner. Figure 13 shows the scanner γ correction based on user input. Because the gray scale chart placed on the contact glass 1 of the image scanner can be larger in size that the gray scale chart disposed in the image scanner, the scanner γ correction based on the separate gray scale chart can provide more precise correction than the scanner γ correction based on the included gray scale chart. For example, as discussed above, the use of the gray scale chart separate from the image scanner can provide 160 data points with which the calibration is conducted. In contrast, because of the smaller size of the gray scale chart included in the image scanner, the use of this smaller gray scale chart generally includes three data points for each of the first half data and the last half data, for each of the four colors, or 24 data points. Because the gray scale chart included in the image scanner provides relatively fewer data points, the image scanner using the separate gray scale chart provides more precise scanner γ correction.

As shown in Figure 11, when the gray scale chart is placed on the contact glass 1, an operating or adjustment mode of determining the scanner γ correction is determined by input through the operating panel (S1). The operating panel provides confirmation as to whether the gray scale chart for adjustment of the scanner γ correction has been placed on the contact glass 1 (S2).

After placement of the gray scale chart on the contact glass 1 is confirmed, the user confirms that adjustment is to be executed (Yes, at S3), the gray scale chart is scanned by the image scanner (S4). The boundary between the first half portion and last half portion is read, with the image processing circuit board (S5).

A detecting level around the boundary between the first half portion and the last half portion is calculated by an average level, for example of 100 x 100 pixel data compounded with EO (even/odd) number pixels of the first half and the last half portion in each tone (for example, for 10 to 20 tones) of a gray scale chart. At this time, γ correction is executed as one of the first half data or the last half data is made linear.

When each position of the 20 tones in the gray scale chart is scanned for each of the first half portion and the last half portion, the data for the first half data can be referred to as FD(1), FD(2), FD(3),..., FD(18), FD(19) and FD(20), while the data for the last half data can be referred to as LD(1), LD(2), LD(3),..., LD(18), LD(19), and LD(20). The first half data can be made linear. The last half data is subject to scanner γ correction. A γ correction table includes a relationship between the first half data and the last half data, such that for a particular last half data LD(n) a corresponding first half data FD(n) is output. By this method, the last half data is subject to scanner γ correction, and the corrected values are applied to the even number pixels and the odd number pixels of the last half data (S6), and the corrected values are stored in the memory (S7).

In a known system, a memory or look-up table stores up to 1024 data points per color, for each of the four colors. However, in the present invention, which uses composed data from odd number pixels and even number pixels, 20 data points are used for each of the first half data and the last half data for each of four colors, or 160 data points for scanner γ correction. Thus, the present invention can use a memory having a relatively smaller storage capacity as compared to the known system.

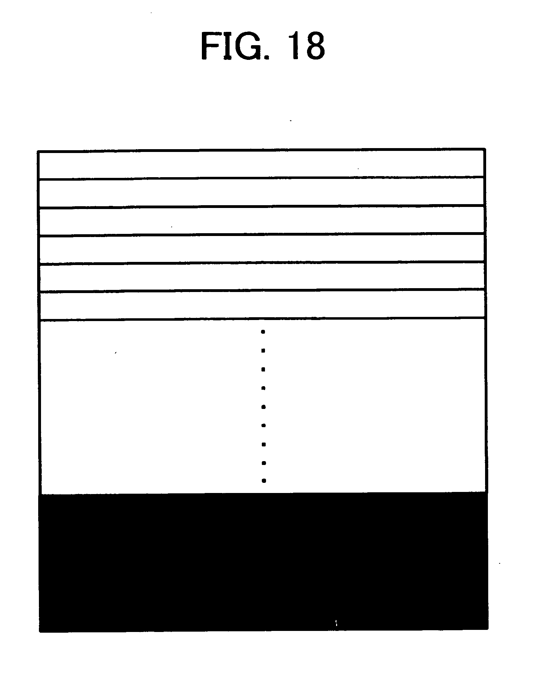

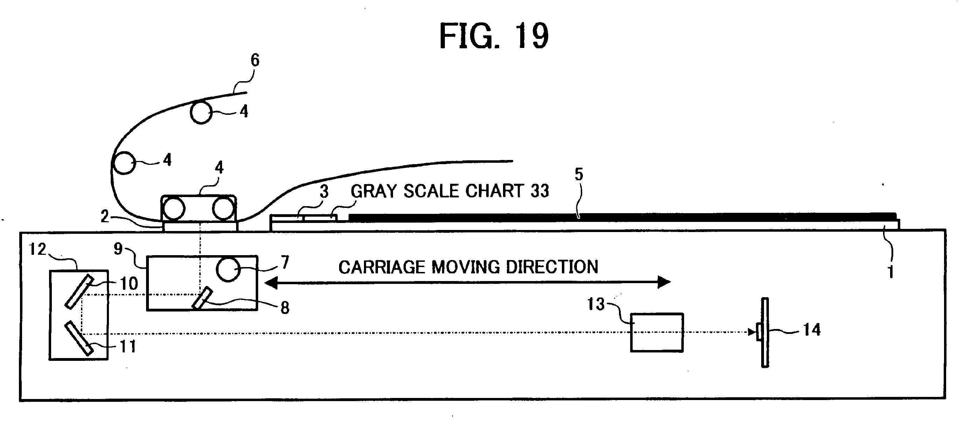

Figure 18 is bottom view of the gray scale chart included in the image scanner, and Figure 19 is a cross-sectional view of the image scanner including the gray scale chart. As shown in the figures, the gray scale chart 33 is included as a component of the image scanner. Generally, during manufacture of the image scanner, the image scanner is calibrated by scanning the gray scale chart separate from the image scanner, in accordance with the method shown in Figure 11. However, in the event that the image scanner loses this initial calibration, for example, the gray scale chart 33 can be used for scanner γ correction, until the image scanner can be recalibrated with the separate, larger gray scale chart permitting more precise calibration. The gray scale chart 33 is linearly shaded, similar to the gray scale chart separate from the image scanner. The gray scale chart 33 can be disposed adjacent the whiteboard 3. Because of the smaller size of the gray scale chart 33 included in the image scanner, the use of this gray scale chart 33 generally includes three data points for each of the first half data and the last half data, for each of the four colors, or 24 data points, as discussed above.

Figure 12 shows the scanner γ correction based on scanning the gray scale chart 33 as a component of the image scanner. As shown in the figure, an operating or adjustment mode of determining the scanner γ correction is determined by input through the operating panel (S11), and the user confirms that adjustment is to be executed (Yes, at S12). The gray scale chart 33 is scanned by the image scanner (S13). The detected level around the boundary between the first half portion and last half portion is calculated, with the image processing circuit board (S 14).

A detecting level around the boundary between the first half portion and the last half portion is calculated by an average level, for example of 100 x 100 pixel data compounded with EO (even/odd) number pixels of the first half and the last half portion in each tone (for example, for 3 tones) of a gray scale chart. At this time, γ correction is executed as one of the first half data or the last half data is made linear.

When each position of the 3 tones in the gray scale chart is scanned for each of the first half portion and the last half portion, the data for the first half data can be referred to as FD(1), FD(2), FD(3), while the data for the last or back half data can be referred to as LD(1), LD(2), LD(3). The first half data can be made linear. The last half data is subject to scanner γ correction. A γ correction table includes a relationship between the first half data and the last half data, such that for a particular last half data LD(n) a corresponding first half data FD(n) is output. By this method, the last half data is subject to scanner γ correction, and the corrected values are applied to the even number pixels and the odd number pixels of the last half data (S 15), and the corrected values are stored in the memory (S16).

An amount of light received by the CCD, or a charging time of the CCD, may be varied, to calibrate the image scanner similar to the calibration with the gray scale chart separate from the image scanner or the gray scale chart 33 as a component of the image scanner.

Figure 13 shows the scanner γ correction based on user input. As shown in the figure, the operation panel 200 displays a result after setting the scanner γ adjustment mode (S21). The user may select an input mode overwriting previous correction data, including correction data based on a previous image scanner calibration or correction data patterns stored in memory (S22). It is determined (S23) whether a pre-determined correction data pattern like S27 in figure 13 (Yes in S23) or whether other data from the user is to be used (No in S23). Plural correction patterns, each subjecting the image to different levels of scanner γ correction, can be stored in the memory. The pattern shown in Figure 8 is an example of such a pattern.

By this method, the γ correction table is calculated (S25), and the resultant values are stored into a memory as γ correction values (S26) in a manner similar to those discussed above.

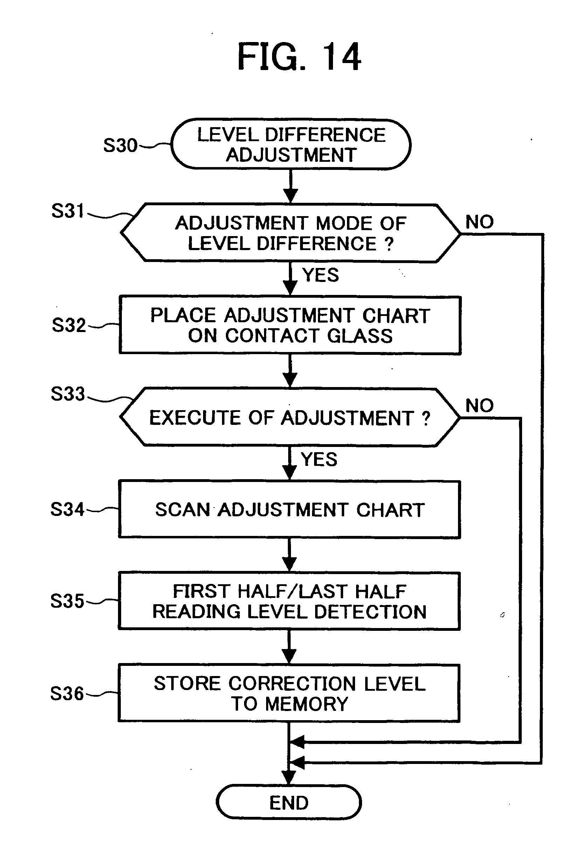

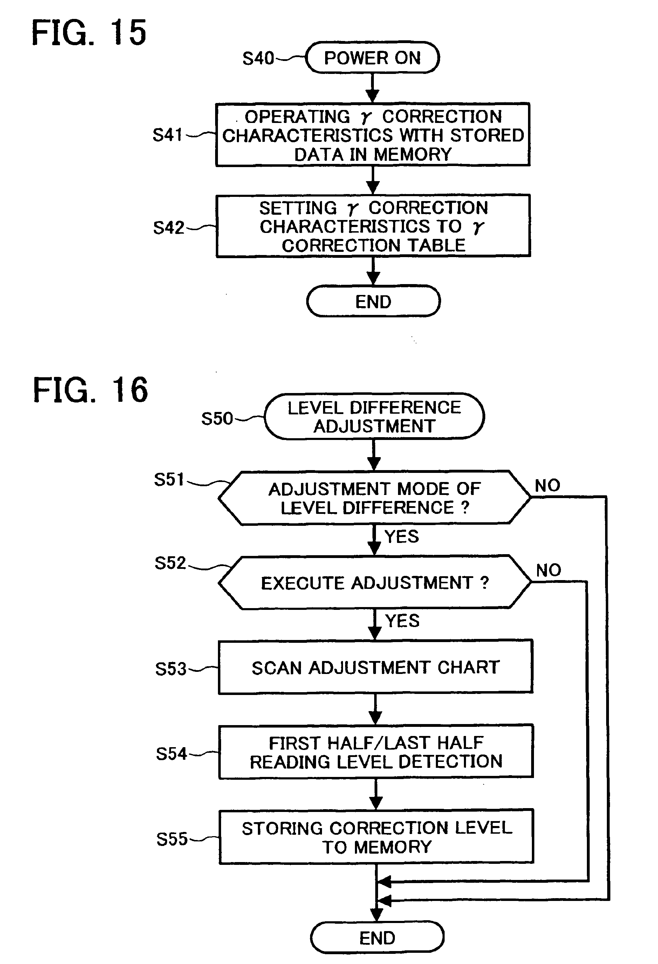

Figures 14-16 show variations of the method shown in Figure 13. Figure 14 shows a flow chart showing the storing in the memory of detected data for adjustment. Figure 15 shows the procedure of making γ correction table operating γ correction characteristics from data stored in the memory when the image scanner is turned on. Figure 16 shows a flow chart for calculating the γ correction characteristics based on the detected data stored in the memory, when the image scanner is turned on.

Specifically, Figure 14 shows the scanner γ correction based on scanning the gray scale chart placed on the contact glass 1. Figure 16 shows the scanner γ correction based on scanning a gray scale chart as a component of the image scanner. Because the gray scale chart placed on the contact glass 1 of the image scanner can be larger in size that the gray scale chart disposed in the image scanner, the scanner γ correction based on the separate gray scale chart can provide more precise correction than the scanner γ correction based on the included gray scale chart. For example, as discussed above, the use of the gray scale chart separate from the image scanner can provide 160 data points with which the calibration is conducted. In contrast, because of the smaller size of the gray scale chart included in the image scanner, the use of this smaller gray scale chart generally includes three data points for each of the first half data and the last half data, for each of the four colors, or 24 data points. Because the gray scale chart included in the image scanner provides relatively fewer data points, the image scanner using the separate gray scale chart provides more precise scanner γ correction.

As shown in Figure 14, when the gray scale chart is placed on the contact glass 1, an operating or adjustment mode of determining the scanner γ correction is determined by input through the operating panel (S31). The operating panel provides confirmation as to whether the gray scale chart for adjustment of the scanner γ correction has been placed on the contact glass 1 (S32).

After placement of the gray scale chart on the contact glass 1 is confirmed, the user confirms that adjustment is to be executed (Yes, at S33), the gray scale chart is scanned by the image scanner (S34). The boundary between the first half portion and last half portion is read, with the image processing circuit board (S35).

A detecting level around the boundary between the first half portion and the last half portion is calculated by an average level, for example of 100 x 100 pixel data compounded with EO (even/odd) number pixels of the first half and the last half portion in each tone (for example, for 3 tones) of a gray scale chart. At this time, γ correction is executed as one of the first half data or the last half data is made linear.

When each position of the 3 tones in the gray scale chart is scanned for each of the first half portion and the last half portion, the data for the first half data can be referred to as FD(1), FD(2), FD(3),..., FD(18), FD(19) and FD(20), while the data for the last half data can be referred to as LD(1), LD(2), LD(3),..., LD(18), LD(19), and LD(20). These values are stored in the memory (S37).

In this embodiment, as shown in Figure 15, the γ correction table is created every time the image scanner is energized (the power is turned on). Specifically, the γ correction table is created from previously detected and stored data. In Figure 15, when the power is turned on (S40), the previously detected and stored data stored in the memory is used to generate the γ correction table, in a manner similar to step S6 in Figure 11. The γ correction table is applied to the values stored in the memory, such that scanner γ correction is completed.

In the known system, discussed above, a memory or look-up table stores up to 1024 data points per color, for each of the four colors. However, in the present invention, which uses composed data from odd number pixels and even number pixels, 20 data points are used for each of the first half data and the last half data for each of four colors, or 160 data points for scanner γ correction. Thus, the present invention can use a memory having a relatively smaller storage capacity as compared to the known system.

Figure 16 shows the scanner γ correction based on scanning the gray scale chart as a component of the image scanner. As shown in the figure, an operating or adjustment mode of determining the scanner γ correction is determined by input through the operating panel (S51), and the user confirms that adjustment is to be executed (Yes, at S52). The gray scale chart is scanned by the image scanner (S53). The boundary between the first half portion and last half portion is read, with the image processing circuit board (S54). A detecting level around the boundary between the first half portion and the last half portion is calculated by an average level, for example of 100 x 100 pixel data compounded with EO (even/odd) number pixels of the first half and the last half portion in each tone (for example, for 3 tones) of a gray scale chart. At this time, γ correction is executed as one of the first half data or the last half data is made linear.

When each position of the 3 tones in the gray scale chart is scanned for each of the first half portion and the last half portion, the data for the first half data can be referred to as FD(1), FD(2), FD(3),..., FD(18), FD(19) and FD(20), while the data for the last half data can be referred to as LD(1), LD(2), LD(3),..., LD(18), LD(19), and LD(20). These values are stored in the memory (S55).

In this embodiment, as discussed above and as shown in Figure 15, the γ correction table is created every time the image scanner is energized (the power is turned on). Specifically, the γ correction table is created from previously detected and stored data. In Figure 15, when the power is turned on (S40), the previously detected and stored data stored in the memory is used to generate the γ correction table, in a manner similar to step S6 in Figure 11. The γ correction table is applied to the values stored in the memory, such that scanner γ correction is completed.

In the known system, discussed above, a memory or look-up table stores up to 1024 data points per color, for each of the four colors. However, in the present invention, which uses composed data from odd number pixels and even number pixels, 20 data points are used for each of the first half data and the last half data for each of four colors, or 160 data points for scanner γ correction. Thus, the present invention can use a memory having a relatively smaller storage capacity as compared to the known system.

As discussed above, an amount of light received by the CCD, or a charging time of the CCD, may be varied, to calibrate the image scanner similar to the calibration with the gray scale chart separate from the image scanner or the gray scale chart as a component of the image scanner.

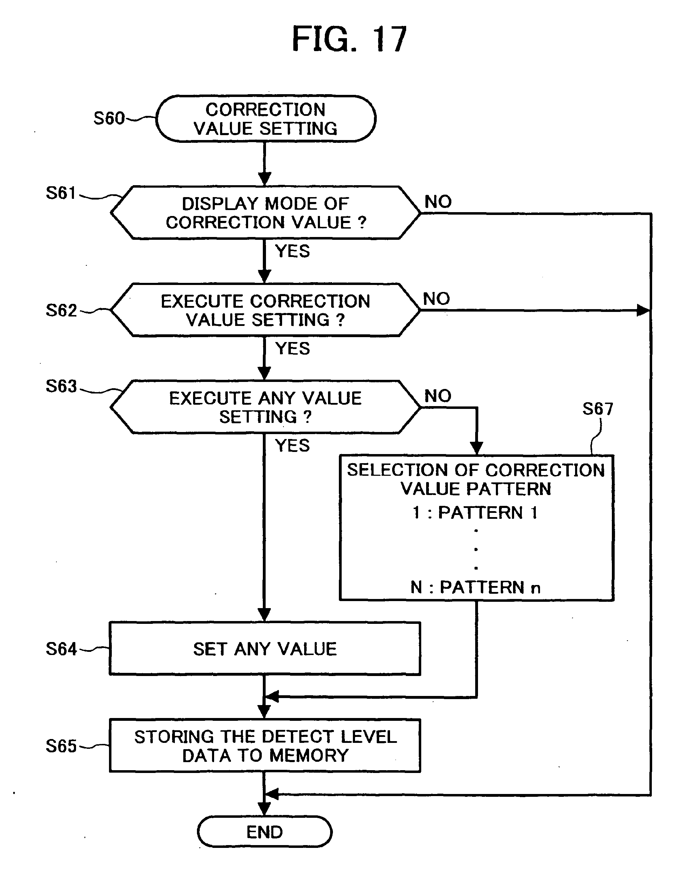

Figure 17 shows the scanner γ correction based on user input. As shown in the figure, the operation panel 200 displays a result after setting the scanner γ adjustment mode (S61). The user may select an input mode overwriting previous correction data, including correction data based on a previous image scanner calibration or correction data patterns stored in memory (S62). It is determined (S63) whether a pre-determined correction data pattern (S67) or whether other data from the user is to be used. Plural correction patterns, each subjecting the image to different levels of scanner γ correction, can be stored in the memory. The pattern shown in Figure 8 is an example of such a pattern. By this method, the image is subjected to scanner γ correction (S25 and S26) in a manner similar to those discussed above.

In this embodiment, as discussed above and as shown in Figure 15, the γ correction table is created every time the image scanner is energized (the power is turned on). Specifically, the γ correction table is created from previously detected and stored data. In Figure 15, when the power is turned on (S40), the previously detected and stored data stored in the memory is used to generate the γ correction table, in a manner similar to step S6 in Figure 11. The γ correction table is applied to the values stored in the memory, such that scanner γ correction is completed.

The invention can be applied to a digital copier, a digital multifunction printer, a facsimile machine, and the like.

This patent document is based on and claims priority to Japanese patent application No. 2004-168855 filed on June 7, 2004.

## Claims

1. An image reading apparatus comprising:
a CCD image sensor having plural shift registers configured to output data corresponding to a first half portion and a last half portion of a document scanned by the CCD image sensor; and
an output conversion unit (103) configured to process data obtained from the shift registers and to output processed first data and processed last data respectively corresponding to the first and last half portions; **characterised by**:
a linearizing unit (105) configured to perform an operation on one of the processed first data and the processed last data to linearize that data and to perform the same operation on the other one of the processed first data and the processed last data; and
a gamma correcting unit (107) including a memory configured to store a correction table representing the relationships between the processed first data and the processed last data in terms of reflectance values and configured to correct only the other one of the processed first data and the processed last data not linearized by the linearizing unit based on the correction table stored in the memory,
wherein the one of the processed first data and the processed last data linearized by the linearizing unit is not subjected to gamma correction.

2. An image reading apparatus as claimed in claim 1, wherein the correction table comprises a predetermined correction table downloaded into the image reading apparatus.

3. An image reading apparatus as claimed in claim 2, further comprising:
an interpolation unit configured to provide correction values for a greater number of data points than there are entries in the correction table.

4. An image reading apparatus as claimed in claim 1 or 2, further comprising:
a control panel configured to permit modification of the correction table.

5. An image reading apparatus as claimed in claim 1, further comprising means to determine the correction table by scanning a gray scale chart.

6. An image reading apparatus as claimed in claim 5, further comprising:
a gray scale chart integral with the image reading apparatus.

7. An image reading apparatus as claimed in claim 5 or 6, further comprising:
a control panel configured to convey an instruction, the image reading apparatus being configured to determine the correction table by scanning said gray scale chart in accordance with the instruction.

8. An image reading apparatus as claimed in any one of claims 1 to 6,
wherein the memory is configured to store the correction table in a look up table.

9. An image reading apparatus according to claim 1, further comprising:
a first memory unit portion configured to store a first data set corresponding to outputs of a charge-coupled device when scanning a first set of positions of a first portion of a correction member having different reflectance values;
a second memory unit portion configured to store a second data set corresponding to outputs of the charge-coupled device when scanning a second set of positions of a second portion of the correction member;
a first transforming unit portion configured to transform the first data set into a transformed first data set;
a second transforming unit portion configured to transform the second data set into a transformed second data set;
a correction unit configured to generate as the correction table a table storing relationships between reflectance values and differences between the transformed first data and the transformed second data for a third set of positions greater in number than each of the first set of positions and the second set of positions.

10. An image reading apparatus according to claim 9, wherein the first transforming unit portion is configured to subject the first data set to an operation to provide the transformed first data set.

11. An image reading apparatus according to claim 9, wherein the second transforming unit portion is configured to subject the second data set to the operation to provide the transformed second data set.

12. An image reading apparatus according to claim 9, wherein the first transforming portion is configured to subject the first data set to an operation to provide a linearized transformed data set.

13. An image reading apparatus according to claim 12, wherein the second transforming unit portion is configured to subject the second data set to the operation to provide a non-linearized transformed second data set.

14. An image reading apparatus according to any one of claims 9 to 13, further comprising:
a correction chart, integral with the image scanner, whereby the first data and the second data are obtained by scanning the integral correction chart.

15. An image reading apparatus according to any one of claims 9 to 13, further comprising:
a platen configured to receive a correction chart from which the first data and second data are scanned.

16. A method of generating a correction table for use in the gamma correcting unit of an image reading apparatus according to claim 1, the method using a gray scale chart having different reflectances at different positions and comprising:
simultaneously scanning a plurality of locations of a first half portion of the gray scale chart that have the same reflectance as one another and combining data values from the respective plurality of locations to obtain each of a plurality of data points of a first data set, each data point thereof corresponding to one of a first set of positions;
simultaneously scanning a plurality of locations of a last half portion of the correction member that have the same reflectance as one another, and combining data values from the respective plurality of locations to obtain each of a plurality of data points of a second data set, each data point thereof corresponding to one of a second set of positions; and
transforming the first data set to obtain a transformed first data set by subjecting the first data set to an operation to linearize the first data set; **characterised by** :
transforming the second data to obtain a transformed second data set by subjecting the second data set to the operation used to linearize the first data set; and
generating as said correction table a table that represents relationships between the transformed first data set and the transformed second data set in terms of reflectances.

17. A method according to claim 16, further comprising:
scanning a first half of a document to obtain first document data;
scanning a second half of a document to obtain second document data;
outputting corrected second document data based on the table.

18. A method according to claim 17, further comprising:
transforming the first document data to obtain corrected first document data.

19. A method according to claim 18, further comprising:
transforming the second document data to obtain transformed second document data; and
inputting into the table the transformed second document data to obtain the corrected second document data.

20. A method according to claim 19, wherein transforming the first document data comprises subjecting the first document data to an operation to linearize the first document data.

21. A method according to claim 20, wherein transforming the second document data comprises subjecting the second document data to the operation to linearize the first document data.

22. A method according to claim 21, wherein transforming the second document data does not result in the transformed second document data being linear.

23. A method according to claim 22, wherein outputting corrected second document data comprises outputting corrected second document data that is linearised based on the table.

24. A method according to any one of claims 16 to 23, wherein scanning the first number of positions comprises scanning a first half of a gray scale chart, and scanning the second number of positions comprises scanning a second half of a gray scale chart.

## Patentansprüche

1. Bildlesevorrichtung, die umfasst:
einen CCD-Bildsensor mit mehreren Schieberegistern, die konfiguriert sind, um Daten auszugeben, die einem ersten Halbabschnitt und einem letzten Halbabschnitt eines durch den CCD-Bildsensor abgetasteten Dokuments entsprechen; und
eine Ausgabeumsetzungseinheit (103), die konfiguriert ist, um die von den Schieberegistem erhaltenen Daten zu verarbeiten und um die verarbeiteten ersten Daten und die verarbeiteten letzten Daten, die dem ersten bzw. dem letzten Halbabschnitt entsprechen, auszugeben, **gekennzeichnet durch**:
eine Linearisierungseinheit (105), die konfiguriert ist, um eine Operation an den verarbeiteten ersten Daten oder an den verarbeiteten letzten Daten auszuführen, um diese Daten zu linearisieren und um die gleiche Operation an den anderen der verarbeiteten ersten Daten und der verarbeiteten letzten Daten auszuführen; und
eine Gammakorrektureinheit (107), die einen Speicher enthält und die konfiguriert ist, um eine Korrekturtabelle zu speichern, die die Beziehungen zwischen den verarbeiteten ersten Daten und den verarbeiteten letzten Daten hinsichtlich der Werte des Reflexionsgrades darstellt, und die konfiguriert ist, um nur die anderen der verarbeiteten ersten Daten und der verarbeiteten letzten Daten, die **durch** die Linearisierungseinheit nicht linearisiert worden sind, basierend auf der in dem Speicher gespeicherten Korrekturtabelle zu korrigieren,
wobei die verarbeiteten ersten Daten oder die verarbeiteten letzten Daten, die **durch** die Linearisierungseinheit linearisiert worden sind, der Gammakorrektur nicht unterworfen werden.

2. Bildlesevorrichtung nach Anspruch 1, wobei die Korrekturtabelle eine vorgegebene Korrekturtabelle umfasst, die in die Bildlesevorrichtung heruntergeladen worden ist.

3. Bildlesevorrichtung nach Anspruch 2, die ferner umfasst:
eine Interpolationseinheit, die konfiguriert ist, um die Korrekturwerte für eine größere Anzahl von Datenpunkten bereitzustellen, als es Einträge in der Korrekturtabelle gibt.

4. Bildlesevorrichtung nach Anspruch 1 oder 2, die ferner umfasst:
ein Bedienfeld, das konfiguriert ist, um die Modifikation der Korrekturtabelle zu erlauben.

5. Bildlesevorrichtung nach Anspruch 1, die ferner Mittel umfasst, um die Korrekturtabelle durch das Abtasten einer Graustufen-Karte zu bestimmen.

6. Bildlesevorrichtung nach Anspruch 5, die ferner umfasst:
eine Graustufen-Karte, die mit der Bildlesevorrichtung einteilig ist.

7. Bildlesevorrichtung nach Anspruch 5 oder 6, die ferner umfasst:
ein Bedienfeld, das konfiguriert ist, um einen Befehl zu befördern, wobei die Bildleseeinrichtung konfiguriert ist, um die Korrekturtabelle durch das Abtasten der Graustufen-Karte in Übereinstimmung mit dem Befehl zu bestimmen.

8. Bildlesevorrichtung nach einem der Ansprüche 1 bis 6, wobei der Speicher konfiguriert ist, um die Korrekturtabelle in einer Nachschlagtabelle zu speichern.

9. Bildlesevorrichtung nach Anspruch 1, die ferner umfasst:
einen ersten Abschnitt der Speichereinheit, der konfiguriert ist, um eine erste Datenmenge zu speichern, die den Ausgaben der ladungsgekoppelten Vorrichtung entspricht, wenn eine erste Menge von Positionen eines ersten Abschnitts eines Korrekturelements, das verschiedene Werte des Reflexionsgrades besitzt, abgetastet wird;
einen zweiten Abschnitt der Speichereinheit, der konfiguriert ist, um eine zweite Datenmenge zu speichern, die den Ausgaben der ladungsgekoppelten Vorrichtung entspricht, wenn eine zweite Menge von Positionen eines zweiten Abschnitts des Korrekturelements abgetastet wird;
einen ersten Transformationseinheits-Abschnitt, der konfiguriert ist, um die erste Datenmenge in eine transformierte erste Datenmenge zu transformieren;
einen zweiten Transformationseinheits-Abschnitt, der konfiguriert ist, um die zweite Datenmenge in eine transformierte zweite Datenmenge zu transformieren;
eine Korrektureinheit, die konfiguriert ist, um eine Tabelle, die die Beziehungen zwischen den Werten des Reflexionsgrades und den Unterschieden zwischen den transformierten ersten Daten und den transformierten zweiten Daten für eine dritte Menge von Positionen, deren Anzahl sowohl größer als die der ersten Menge von Positionen als auch größer als die der zweiten Menge von Positionen ist, speichert, als die Korrekturtabelle zu erzeugen.

10. Bildlesevorrichtung nach Anspruch 9, wobei der erste Transformationseinheits-Abschnitt konfiguriert ist, um die erste Datenmenge einer Operation zu unterwerfen, um die transformierte erste Datenmenge zu schaffen.

11. Bildlesevorrichtung nach Anspruch 9, wobei der zweite Transformationseinheits-Abschnitt konfiguriert ist, um die zweite Datenmenge der Operation zu unterwerfen, um die transformierte zweite Datenmenge zu schaffen.

12. Bildlesevorrichtung nach Anspruch 9, wobei der erste Transformationsabschnitt konfiguriert ist, um die erste Datenmenge einer Operation zu unterwerfen, um eine linearisierte transformierte Datenmenge zu schaffen.

13. Bildlesevorrichtung nach Anspruch 12, wobei der zweite Transformationseinheits-Abschnitt konfiguriert ist, um die zweite Datenmenge der Operation zu unterwerfen, um eine nicht linearisierte transformierte zweite Datenmenge zu schaffen.

14. Bildlesevorrichtung nach einem der Ansprüche 9 bis 13, die ferner umfasst:
eine Korrekturkarte, die mit dem Bild-Scanner einteilig ist, wodurch die ersten Daten und die zweiten Daten durch das Abtasten der einteiligen Korrekturkarte erhalten werden.

15. Bildlesevorrichtung nach einem der Ansprüche 9 bis 13, die ferner umfasst:
eine Auflageplatte, die konfiguriert ist, um eine Korrekturkarte aufzunehmen, von der die ersten Daten und die zweiten Daten abgetastet werden.

16. Verfahren zum Erzeugen einer Korrekturtabelle für die Verwendung in der Gammakorrektureinheit einer Bildlesevorrichtung nach Anspruch 1, wobei bei dem Verfahren eine Graustufen-Karte, die verschiedene Reflexionsgrade in verschiedenen Positionen besitzt, verwendet wird, wobei das Verfahren umfasst:
gleichzeitiges Abtasten mehrerer Orte eines ersten Halbabschnitts der Graustufen-Karte, die jeweils den gleichen Reflexionsgrad besitzen, und Kombinieren der Datenwerte von den jeweiligen mehreren Orten, um jeden von mehreren Datenpunkten einer ersten Datenmenge zu erhalten, wobei jeder Datenpunkt der ersten Datenmenge einer Position aus einer ersten Menge von Positionen entspricht;
gleichzeitiges Abtasten mehrerer Orte eines letzten Halbabschnitts des Korrekturelements, die jeweils den gleichen Reflexionsgrad besitzen, und Kombinieren der Datenwerte von den jeweiligen mehreren Orten, um jeden von mehreren Datenpunkten einer zweiten Datenmenge zu erhalten, wobei jeder Datenpunkt der zweiten Datenmenge einer Position aus einer zweiten Menge von Positionen entspricht; und
Transformieren der ersten Datenmenge, um eine transformierte erste Datenmenge zu erhalten, indem die erste Datenmenge einer Operation unterworfen wird, um die erste Datenmenge zu linearisieren; **gekennzeichnet durch**:
Transformieren der zweiten Datenmenge, um eine transformierte zweite Datenmenge zu erhalten, indem die zweite Datenmenge der Operation unterworfen wird, die verwendet wird, um die erste Datenmenge zu linearisieren; und
Erzeugen einer Tabelle, die die Beziehungen zwischen der transformierten ersten Datenmenge und der transformierten zweiten Datenmenge hinsichtlich der Reflexionsgrade darstellt, als die Korrekturtabelle.

17. Verfahren nach Anspruch 16, das ferner umfasst:
Abtasten einer ersten Hälfte eines Dokuments, um erste Dokumentdaten zu erhalten;
Abtasten einer zweiten Hälfte eines Dokuments, um zweite Dokumentdaten zu erhalten;
Ausgeben der basierend auf der Tabelle korrigierten zweiten Dokumentdaten.

18. Verfahren nach Anspruch 17, das ferner umfasst:
Transformieren der ersten Dokumentdaten, um korrigierte erste Dokumentdaten zu erhalten.

19. Verfahren nach Anspruch 18, das ferner umfasst:
Transformieren der zweiten Dokumentdaten, um transformierte zweite Dokumentdaten zu erhalten; und
Eingeben der transformierten zweiten Dokumentdaten in die Tabelle, um die korrigierten zweiten Dokumentdaten zu erhalten.

20. Verfahren nach Anspruch 19, bei dem das Transformieren der ersten Dokumentdaten umfasst, dass die ersten Dokumentdaten einer Operation unterworfen werden, um die ersten Dokumentdaten zu linearisieren.

21. Verfahren nach Anspruch 20, bei dem das Transformieren der zweiten Dokumentdaten umfasst, dass die zweiten Dokumentdaten der Operation unterworfen werden, um die ersten Dokumentdaten zu linearisieren.

22. Verfahren nach Anspruch 21, bei dem das Transformieren der zweiten Dokumentdaten nicht zu den transformierten zweiten Dokumentdaten, die linear sind, führt.

23. Verfahren nach Anspruch 22, bei dem das Ausgeben der korrigierten zweiten Dokumentdaten das Ausgeben der korrigierten zweiten Dokumentdaten, die basierend auf der Tabelle linearisiert worden sind, umfasst.

24. Verfahren nach einem der Ansprüche 16 bis 23, bei dem das Abtasten der ersten Anzahl von Positionen das Abtasten einer ersten Hälfte einer Graustufen-Karte umfasst und das Abtasten der zweiten Anzahl von Positionen das Abtasten einer zweiten Hälfte einer Graustufen-Karte umfasst.

## Revendications

1. Appareil de lecture d'image comprenant :
un capteur d'image CCD ayant plusieurs registres à décalage configurés pour délivrer des données correspondant à une première moitié et à une dernière moitié d'un document balayé par le capteur d'image CCD : et
une unité de conversion de sortie (103) configurée pour traiter des données obtenues des registres à décalage et pour délivrer les premières données traitées et les dernières données traitées correspondant respectivement à la première moitié et à la dernière moitié; **caractérisée par** :
une unité de linéarisation (105) configurée pour exécuter une opération sur une des données parmi les premières données traitées et les dernières données traitées pour linéariser ces données et pour exécuter la même opération sur les autres données parmi les premières données traitées et les dernières données traitées ; et
une unité de correction de gamma (107) comprenant une mémoire configurée pour stocker une table de correction représentant les relations entre les premières données traitées et les dernières données traitées en termes de valeurs de réflectance, et configurée pour corriger uniquement les autres données parmi les premières données traitées et les dernières données traitées non linéarisées par l'unité de linéarisation sur la base de la table de correction stockée en mémoire,
dans lequel les données parmi les premières données traitées et les dernières données traitées linéarisées par l'unité de linéarisation ne sont pas soumises à une correction de gamma.

2. Appareil de lecture d'image tel que revendiqué dans la revendication 1, dans lequel la table de correction comprend une table de correction prédéterminée téléchargée dans l'appareil de lecture d'image.

3. Appareil de lecture d'image tel que revendiqué dans la revendication 2, comprenant en outre :
une unité d'interpolation configurée pour fournir des valeurs de correction pour un plus grand nombre de points de données qu'il y a d'entrées dans la table de correction.

4. Appareil de lecture d'image tel que revendiqué dans la revendication 1 ou la revendication 2, comprenant en outre :
un panneau de commande configuré pour permettre la modification de la table de correction.

5. Appareil de lecture d'image tel que revendiqué dans la revendication 1, comprenant en outre un moyen pour déterminer la table de correction en balayant une mire en niveaux, de gris.

6. Appareil de lecture d'image les que revendiqué dans la revendication 5, comprenant en outre :
une mire en niveaux de gris intégrée à l'appareil de lecture d'image.

7. Appareil de lecture d'image tel que revendiqué dans la revendication 5 ou la revendication 6, comprenant en outre :
un panneau de commande configuré pour transmettre une instruction, l'appareil de lecture d'image étant configuré pour déterminer la table de correction en balayant ladite mire en niveaux de gris conformément à l'instruction.

8. Appareil de lecture d'image tel que revendiqué dans l'une quelconque des revendications 1 à 6, dans lequel la mémoire est configurée pour stocker la table de correction dans une table de conversion.

9. Appareil de lecture d'image selon la revendication 1, comprenant en outre :
une première partie d'unité de mémoire configurée pour stocker un premier jeu de données correspondant aux sorties d'un dispositif à couplage de charges lors du balayage d'un premier jeu de positions d'une première partie d'un élément de correction ayant différentes valeurs de réflectance ;
une seconde partie d'unité de mémoire configurée pour stocker un second jeu de données correspondant aux sorties du dispositif à couplage de charges lors du balayage d'un second jeu de positions d'une seconde partie de l'élément de correction ;
une première partie d'unité de transformation configurée pour transformer le premier jeu de données en un premier jeu de données transformées ;
une seconde partie d'unité de transformation configurée pour transformer le second jeu de données et un second jeu de données transformées ;
une unité de correction configurée pour générer en tant que table de correction une table stockant des relations entre des valeurs de réflectance et des différences entre les premières données transformées et les secondes données transformées pour un troisième jeu de positions dont le nombre de positions est plus important que celui de chacun du premier jeu de positions et du deuxième jeu de positions.

10. Appareil de lecture d'image selon la revendication 9, dans lequel la première partie d'unité de transformation est configurée pour soumettre le premier jeu de données à une opération pour délivrer le premier jeu de données transformées.

11. Appareil de lecture d'image selon la revendication 9, dans lequel la seconde partie d'unité de transformation est configurée pour soumettre le second jeu de données à l'opération pour délivrer le second jeu de données transformées.

12. Appareil de lecture d'image selon la revendication 9, dans lequel la première partie de transformation est configurée pour soumettre le premier jeu de données à une opération pour délivrer un jeu de données transformées linéarisées.

13. Appareil de lecture d'image selon la revendication 12, dans lequel la seconde partie d'unité de transformation est configurée pour soumettre le second jeu de données à l'opération pour délivrer un second jeu de données transformées non linéarisées.

14. Appareil de lecture d'image selon l'une quelconque des revendications 9 à 13, comprenant en outre :
une mire de correction intégrée au balayeur d'image, dans laquelle les premières données et les secondes données sont obtenues en balayant l'ensemble de la mire de correction.

15. Appareil de lecture d'image selon l'une quelconque des revendications 9 à 13, comprenant en outre :
une platine configurée pour recevoir une mire de correction à partir de laquelle les premières données et les secondes données sont balayées.

16. Procédé de genération d'une talle de correction destinée à être utilisée dans l'unité de correction de gamma d'un appareil de lecture d'image selon la revendication 1, le procédé utilisant une mire en niveaux de gris ayant différentes réflectances à différentes positions, et comprenant les étapes consistant à :
simultanément balayer une pluralité d'emplacements d'une première moitié de la mire en niveaux de gris qui a la même réflectance qu'une autre et combiner des valeurs de données de la pluralité respective d'emplacement pour obtenir chacun d'une pluralité de points de données d'un premier jeu de données, chaque point de données de celui-ci correspondant à une position d'un premier jeu de positions ;
simultanément balayer une pluralité d'emplacements d'une dernière moitié d'un élément de correction qui a la même réflectance qu'une autre, et combiner des valeurs de données de la pluralité respective d'emplacements pour obtenir chacun d'une pluralité de points de données d'un second jeu de données, chaque point de données de celui-ci correspondant à une position d'un deuxième jeu de positions; et
transformer le premier jeu de données pour obtenir un premier jeu de données transformées en soumettant le premier jeu de données à une opération pour linéariser le premier jeu de données; étape **caractérisée par** :
la transformation du second jeu de données pour obtenir un second jeu de données transformées en soumettant le second jeu de données à l'opération utilisée pour linéariser le premier jeu de données : et
générer, en tant que dite table de correction, une table qui représente des relations entre les premières données transformées et les secondes données transformées en termes de réflectances.

17. Procède selon la revendication 16, comprenant en outre les étapes consistant à :
balayer une première moitié d'un document pour obtenir des premières donner de document ;
balayer une seconde moitié d'un document pour obtenir des secondes données de document ;
délivrer en sorite des secondes données de document corrigées sur la base de la table.

18. Procède selon la revendication 17, comprenant en outre l'étape consistant à :
transformer les premières données de document pour obtenir des premières données de document corrigées.

19. Procède selon la revendication 18. comprenant en outre les étapes consistant à :
transformer les secondes données de document pour obtenir des secondes données de document transformées ; et
entrer dans la table les secondes données de document transformées pour obtenir les secondes données de document corrigées.

20. Procède selon la revendication 19, dans lequel la transformation des premières données de document comprend de soumettre les premières données de document à une opération pour linéariser les premières données de document.

21. Procède selon la revendication 20, dans lequel la transformation des secondes données de document comprend de soumettre les secondes données de document l'opération pour linéariser les premières données de document.

22. Procède selon la revendication 21, dans lequel la transformation des secondes données de document ne conduit pas à ce que les secondes données de document transformées soient linéaires.

23. Procède selon la revendication 22, dans lequel la délivrance en sortie de secondes données de document corrigées comprend de délivrer en sortie des secondes données de document corrigées qui sont linéarisées sur la base de la table.

24. Procédé selon l'une quelconque des revendications 16 à 23, dans lequel le balayage du premier nombre de positions comprend de balayer une première moitié d'une mire en niveaux de gris, et le balayage du second nombre de positions comprend de balayer une seconde moitié d'une mire en niveaux de gris.
